# EUROPÄISCHE PATENTSCHRIFT

(11) **EP 0 638 257 B1**
(45) Veröffentlichungstag und Bekanntmachung des Hinweises auf die Patenterteilung: **14.10.1998**
(21) Anmeldenummer: 94111033.0
(22) Anmeldetag: 15.07.1994
(51) Int. Cl.: A45B 11/00, A47B 37/04, F16M 13/02

(54) **Haltevorrichtung für Stangen, Rohre oder dergleichen**
Holding device for rods, tubes and the like
Dispositif de fixation pour barres, tubes et analogues

(30) Priorität: 11.08.1993 DE 9311951 U
(43) Veröffentlichungstag der Anmeldung: 15.02.1995
(73) Patentinhaber: Schoen, Hans, D-45527 Hattingen (DE)
(72) Erfinder: Schoen, Hans, D-45527 Hattingen (DE)
(74) Vertreter: Behrendt, Arne, Dipl.-Ing.

(56) Entgegenhaltungen:
- WO-A-86/01763
- CH-A- 181 668
- CH-A- 681 769
- DE-A- 3 619 467
- DE-U- 8 712 448
- US-A- 5 172 885

## Beschreibung

Die Erfindung bezieht sich auf eine Haltevorrichtung für Stangen, Rohre oder dergleichen, insbesondere für Sonnenschirme, gemäß dem Oberbegriff des Anspruchs 1.

Eine Haltevorrichtung dieser Art ist seit Jahren bekannt, siehe z.B. DE-U-8 712 448, DE-A-3 619 467; sie wird in Eisenwarenhandlungen oder im Zusammenhang mit Garten- und Freizeitmöbeln in Fachgeschäften angeboten. In der Regel besteht sie aus einem U-förmigen Bügelelement zum Aufsetzen auf eine Tischkante, wobei am unteren Schenkel in einer Gewindebohrung eine Feststellschraube gelagert ist. An dem in der Gebrauchsstellung senkrechten Steg des Bügelelements ist ein Ring angeformt, der in einer Gewindebohrung in der Wandung eine etwa radial stehende, von Hand bedienbare Druckschraube enthält. Zum Halter eines Sonnenschirmes wird die Haltevorrichtung an geeigneter Stelle eines Gartentisches oder dergleichen verspannt. Anschließend wird die Stange des Sonnenschirmes in den Ring von oben so weit eingeschoben, daß sie mit ihrer Spitze in das Erdreich eindringt. Danach wird die Druckschraube angezogen.

Die bekannte einteilige Haltevorrichtung ist außer für eine Verwendung im vorstehend beschriebenen Sinne für andere Arten der Halterung von Stangen oder Rohren nicht geeignet. So ist eine solche Haltevorrichtung beispielsweise dann nicht einsetzbar, wenn zum Halten einer senkrecht verlaufenden Stange keine Tischplatte, dafür aber ein senkrechtes Wandelement zur Verfügung steht. Auch ist eine solche Haltevorrichtung nicht geeignet, um eine waagerecht verlaufende Stange mit einer Tischplatte zu verbinden. Hier will die Erfindung Abhilfe schaffen.

Die Aufgabe der Erfindung besteht dementsprechend darin, eine Haltevorrichtung für Stangen, Rohre oder dergleichen zu verbessern und weiter zu entwickeln mit dem Ziel, daß sie für unterschiedliche Anwendungsfälle gleichermaßen gut verwendbar ist.

Ausgehend von der bekannten Haltevorrichtung besteht die Lösung dieser Aufgabe erfindungsgemäß darin, daß das Bügelelement im wesentlichen wie der Buchstabe H gestaltet ist und daß die Flansche wahlweise auf einen der freien Schenkel oder auf den Quersteg des Bügelelements aufsteckbar und mittels einer Arretierung am Bügelelement verriegelbar sind.

Vorteilhafte Weiterbildungen sind in den Unteransprüchen beschrieben.

Nach einer ersten zweckmäßigen Weiterbildung ist vorgesehen, daß der in Verlängerung der Gewindebohrung verlaufende freie Schenkel des Bügelelements als Doppel-T-Profil mit zur Bohrungsachse querstehendem Steg ausgebildet ist und daß der gegenüberliegende freie Schenkel und teilweise der Quersteg ebenfalls als Doppel-T-Profile, jedoch mit parallel zur Bohrungsachse verlaufendem Steg ausgebildet sind.

Gemäß einer anderen Weiterbildung haben die Flansche des Aufnahmeringes eine solche Dicke, daß sie auf die Doppel-T-Profile von ihren Stirnseiten her aufschiebbar sind und einzeln in je einem Profilkanal formschlüssig einliegen. Damit ist ein starrer Zusammenhalt zwischen Aufnahmering und Bügelelement gewährleistet.

Zur Arretierung des Aufnahmeringes in der jeweiligen Stellung sind an den Stegen der Doppel-T-Profile Arretiermittel wie aufeinanderfolgende Bohrungen oder Zacken vorgesehen. Nach einer anderen Weiterbildung ist in Bohrungen der Flansche des Aufnahmeringes ein verschiebbarer, federbelasteter Arretierstift gelagert, der in der Gebrauchsstellung des Aufnahmeringes formschlüssig in eine Bohrung bzw. zwischen zwei Zacken eingreift.

Um den Aufnahmering auch am Quersteg des Bügelelements in verschiedenen Stellungen bzw. Abständen anbringen zu können, ist es zweckmäßig, den Quersteg an der von der Gewindebohrung abgewandten Seite durch einen Ansatz über die Schenkel hinaus zu verlängern, und zwar deckungsgleich als Doppel-T-Profil.

Zur Erzielung einer verbesserten Zentrierung der Stange oder des Rohres im Aufnahmering ist es zweckmäßig, daß der Schenkel in Verlängerung der Gewindebohrung an seinem Stirnende einen V-Einschnitt mit zur Ebene seines Profilsteges parallelen Kanten aufweist. In gleicher Weise sind der andere Schenkel und der Ansatz am Quersteg gestaltet.

Eine andere Weiterbildung betrifft die Mittel zum Verspannen einer Stange oder eines Rohres im Aufnahmering. Zu diesem Zweck ist am Aufnahmering in einer radialen Gewindebohrung, die den Flanschen diametral gegenüberliegt eine Spannschraube vorgesehen, wobei an der Spannschraube an ihrem rückwärtigen Ende, an der diese ein Handrädchen trägt, ein Druckbügel in U-Form frei drehbar gelagert ist, dessen Schenkel zu beiden Seiten des Aufnahmeringes verlaufen und an ihrem freien Ende je einen V-Einschnitt mit parallel zur Ringachse verlaufenden Kanten aufweisen. Zusammen mit dem jeweils gegenüberliegenden V-Einschnitt ist so eine selbsttätige Zentrierung der vom Aufnahmering umschlossenen Stange gewährleistet, selbst dann, wenn die Stange erheblich dünner ist als der Innendurchmesser des Halteringes.

Nach einer anderen vorteilhaften Weiterbildung ist an einem Flansch des Aufnahmeringes ein seitlicher Ansatz angeformt, an dem in einer Querbohrung der federbelastete Arretierstift gelagert ist. Zum Erfassen des Arretierstiftes dient ein an seinem Ende befestigter Kugelkopf.

Der Hauptvorteil der neuen Haltevorrichtung ist darin zu sehen, daß sie für zahlreiche, unterschiedliche Anwendungsfälle, sei es im Haushalt oder im Garten- oder Freizeitbereich, zum Halten von Stangen oder Rohren geeignet ist. Das Bügelelement kann je nach Bedarf an einer waagerechten Tischplatte oder an der Kante einer senkrechten Wand befestigt werden. Je nachdem, ob die Stange oder das Rohr in der Gebrauchsstellung senkrecht oder waagerecht verlaufen soll, wird der Aufnahmering an einem Schenkel oder am Quersteg des Bügelelements angesetzt. Dabei ist er für das Aufnehmen von Stangen mit unterschiedlichen Stärken leicht bedarfsgerecht einstellbar. Dadurch, daß die parallelen Flansche des Aufnahmeringes jeweils formschlüssig in einem Profilkanal einliegen, ist ein starrer Zusammenhalt zwischen Bügelelement und Aufnahmering gewährleistet. Das Umsetzen des Aufnahmeringes kann mit wenigen Handgriffen vorgenommen werden.

Ein Ausführungsbeispiel der Erfindung ist in der Zeichnung schematisch dargestellt und wird nachfolgend näher erläutert. Es zeigt:
- Fig. 1: eine Seitenansicht einer Haltevorrichtung gemäß der Erfindung in einer ersten Benutzungsform,
- Fig. 2: eine Draufsicht der Haltevorrichtung nach Fig. 1,
- Fig. 3: eine Seitenansicht der Haltevorrichtung in einer zweiten Benutzungsform,
- Fig. 4: eine Draufsicht der Haltevorrichtung nach Fig. 3,
- Fig. 5: eine Seitenansicht der Einzelteile der Haltevorrichtung vor dem Zusammensetzen für eine dritte Benutzungsform und
- Fig. 6: eine Stirnansicht der Einzelteile der Haltevorrichtung nach Fig. 5.

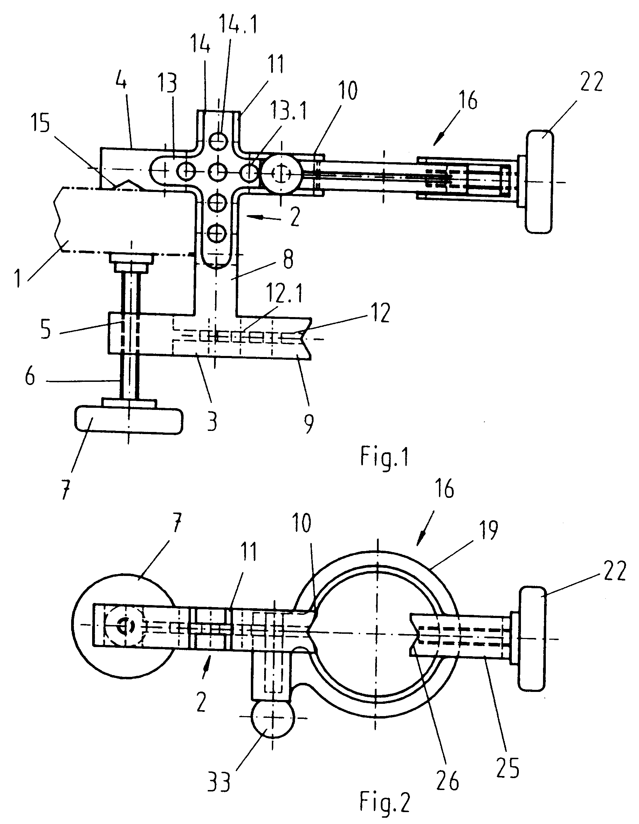

Die Fig. 1 und 2 zeigen die Haltevorrichtung bei der Benutzung zum Halten eines Sonnenschirmes an einem Gartentisch oder dergleichen. Von dem Gartentisch ist lediglich das Ende der Tischplatte 1 angedeutet. Das im wesentlichen H-förmig gestaltete Bügelelement 2 ist mit zwei parallelen Schenkeln 3, 4 von der Seite her auf die Tischplatte 1 aufgeschoben. Im Schenkel 3 ist in einer Gewindebohrung 5 eine Feststellschraube 6 mit einem äußeren Handrädchen 7 gelagert. Durch Anziehen der Feststellschraube 6 ist das Bügelelement 2 mit der Tischplatte 1 fest verspannbar.

Die Länge des Steges 8 des Bügelelements ist so bemessen, daß die Haltevorrichtung an Tischplatten mit unterschiedlichen Stärken verwendbar ist.

Außer den beiden vorgenannten Schenkeln 3, 4 enthält das Bügelelement 2 etwa gleich lange freie Schenkel 9, 10 und einen Ansatz 11 als Verlängerung des Steges 8. Die Schenkel 9, 10 sowie der Steg 8 teilweise und der Ansatz 11 sind als Doppel-T-Profil ausgebildet. Die Herstellung des Bügelelements kann im metallischen Druckgußverfahren erfolgen.

Am Schenkel 9 hat das Doppel-T-Profil eine solche Lage, daß sein Steg 12 quer zur Achse der Gewindebohrung 5 und damit quer zur Ebene des Bügelelements 2 verläuft. Anders verhält es sich mit den Doppel-T-Profilen im anderen Schenkel 10, im Quersteg 8 und im Ansatz 11, bei denen der Steg 13 bzw. 14 in der Mittenebene des Bügelelements und damit senkrecht zum Steg 12 verläuft.

In allen Stegen 12, 13, 14 sind eine Anzahl von Bohrungen 12.1, 13.1. und 14.1 mit etwa gleichem Abstand hintereinander angeordnet.

In dem Schenkel 4 ist an der Innenfläche eine keilförmige Einkerbung 15 mittig zur Achse der Gewindebohrung 5 angebracht, die im Falle einer Befestigung der Haltevorrichtung an einem Rundstab einen rutschfesten Halt gewährleisten soll.

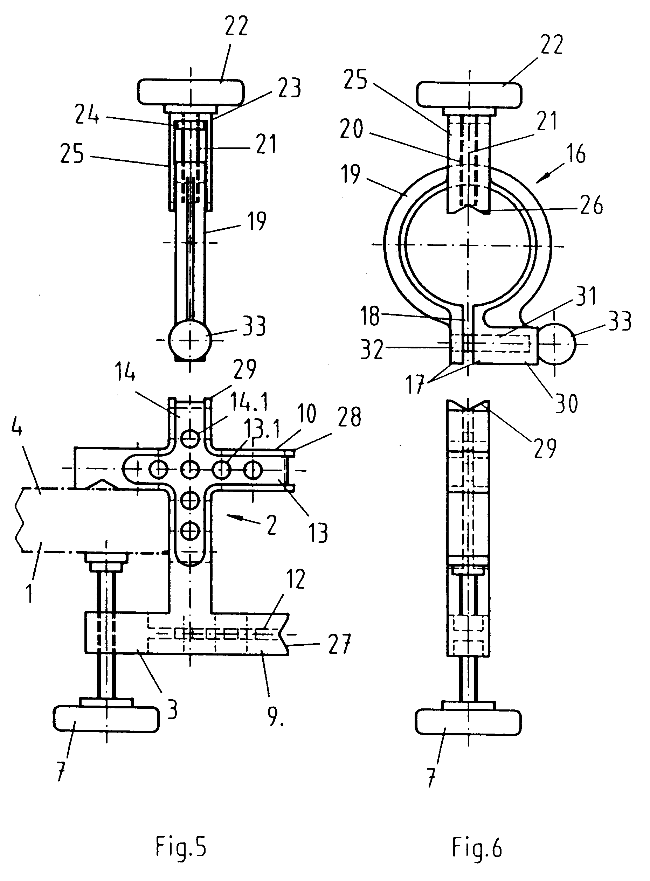

Die Umrißform des selbständigen Aufnahmeringes 16 ist am besten erkennbar aus den Einzeldarstellungen in den Fig. 5 und 6. Im wesentlichen hat der Aufnahmering 16 die Gestalt einer einteiligen Rohrschelle mit zwei radial abstehenden Flanschen 17, zwischen denen ein Spalt 18 in der Stärke der Stege der Doppel-T-Profile frei gelassen ist. Der nahezu geschlossene Ringkörper 19 enthält in Verlängerung des Spaltes 18 eine radial verlaufende Gewindebohrung 20 mit einer darin gelagerten Spannschraube 21 mit äußerem Handrädchen 22. Auf der Spannschraube 21 ist ein Druckbügel 23 frei drehbar gelagert, der durch einen Sicherungsring 24 an einer Axialverschiebung gehindert ist. Die Schenkel 25 des Druckbügels 23 sind an ihrem freien Ende mit je einem V-Einschnitt 26 versehen.

Auch an den freien Enden der Schenkel 9, 10 und des Ansatzes 11 befindet sich je ein V-Einschnitt 27, 28 bzw. 29. Je nach der Anwendung des Aufnahmeringes wirken beim Einspannen einer Stange die V-Einschnitte 26 einerseits und einer der übrigen V-Einschnitte 27, 28 bzw. 29 zusammen (vgl. Fig. 2, 3 oder 6).

An einem Flansch 17 des Aufnahmeringes 16 ist ein seitlicher Ansatz 30 mit einer Querbohrung 31 angeformt. In der Querbohrung 31 ist ein federbelasteter Stift 32 gelagert, der an seinem äußeren Ende einen Betätigungsknopf 33 trägt. In der Ruhestellung dringt das freie Ende des Arretierstiftes 31 in eine fluchtende Bohrung des gegenüberliegenden Flansches ein.

Zum Verbinden des Aufnahmeringes 16 mit dem Bügelelement 2 werden die Flansche 17 bei zurückgezogenem Arretierstift 32 auf das freie Ende eines Doppel-T-Profils aufgeschoben, bis der Arretierstift in eine Bohrung einrasten kann. Je nach der Stärke der zu haltenden Stange wird der Aufnahmering 16 dabei mehr oder weniger weit auf das jeweilige Doppel-T-Profil aufgeschoben. Die Fig. 1, 2 sowie 3, 4 zeigen jeweils den Aufnahmering 16 in einer Stellung, in der die größtmögliche Weite des Aufnahmeringes für das Einsetzen einer Stange zur Verfügung steht.

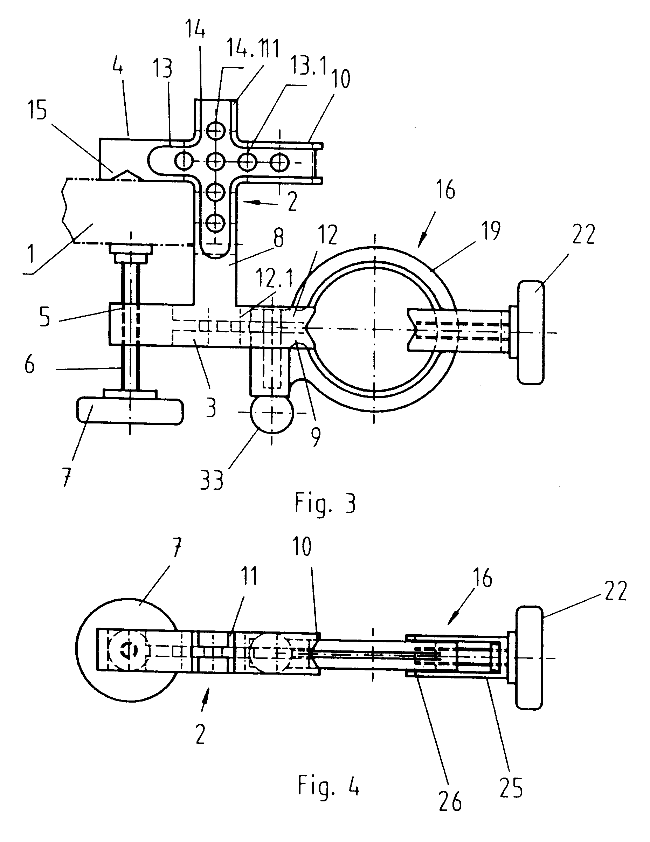

Die Fig. 3 und 4 zeigen die Haltevorrichtung in einer Benutzungsform, bei der sie beispielsweise an einer senkrechten Wand verspannt ist und dazu dient, eine senkrecht verlaufende Stange zu halten. Wird sie dagegen in dieser Benutzungsform an einer Tischplatte angebracht, kann sie zum Halten einer waagerechten Stange dienen. Die Benutzungsform der Fig. 5 und 6 ist beispielsweise anwendbar, wenn es darum geht, an einer Tischplatte eine oberhalb derselben waagerecht zu dieser verlaufende Stange mit der Tischplatte zu verbinden.

## Patentansprüche

1. Haltevorrichtung für Stangen, Rohre oder dergleichen, insbesondere für Sonnenschirme, die ein Bügelelement (2) zum Aufsetzen auf eine Tischkante und eine Feststellschraube (6) aufweist, wobei zwei parallele Schenkel (3, 4) in der Gebrauschsstellung eine Platte oder dergleichen zwischen sich aufnehmen und mit Hilfe der Feststellschraube (6), die in einer Gewindebohrung (5) eines Schenkels (3) gelagert ist, verspannbar sind, die Haltevorrichtung ferner einen Aufnahmering (16) zur Aufnahme einer Stange enthält, die im Aufnahmering verspannbar ist, und das Bügelelement (2) und der Aufnahmering (16) selbständige Einzelteile sind,, wobei der Aufnahmering (16) im wesentlichen wie eine Rohrschelle mit zwei etwa radial abstehenden, einen Spalt (18) begrenzenden Flanschen (17) gestaltet ist, dadurch gekennzeichnet, daß das Bügelelement (2) im wesentlichen wie der Buchstabe H gestaltet ist und daß die Flansche (17) wahlweise auf einen der freien Schenkel (9 bzw. 10) oder auf den Quersteg (8) des Bügelelements (2) aufsteckbar und mittels einer Arretierung am Bügelelement (2) verriegelbar sind.

2. Haltevorrichtung nach Anspruch 1, dadurch gekennzeichnet, daß der in Verlängerung der Gewindebohrung (5) verlaufende freie Schenkel (9) des Bügelelements (2) als Doppel-T-Profil mit zur Bohrungsachse querstehendem Steg (12) ausgebildet ist und daß der gegenüberliegende freie Schenkel (10) und teilweise der Quersteg (8) ebenfalls als Doppel-T-Profile, jedoch mit parallel zur Bohrungsache verlaufendem Steg (13 bzw. 14) ausgebildet sind.

3. Haltevorrichtung nach Anspruch 2, dadurch gekennzeichnet, daß die Flansche (17) des Aufnahmeringes (16) eine solche Dicke haben, daß sie auf die Doppel-T-Profile von ihren Stirnseiten her aufschiebbar sind und einzeln in je einem Profilkanal formschlüssig einliegen.

4. Haltevorrichtung nach Anspruch 2 oder 3, dadurch gekennzeichnet, daß an den Stegen (12, 13 bzw. 14) der Doppel-T-Profile Arretiermittel wie aufeinanderfolgende Bohrungen (12.1, 13.1 bzw. 14.1) oder Zacken vorgesehen sind.

5. Haltevorrichtung nach Anspruch 4, dadurch gekennzeichnet, daß in Bohrungen (31) der Flansche (17) des Aufnahmeringes (16) ein verschiebbarer, federbelasteter Arretierstift (32) gelagert ist, der in der Gebrauchsstellung des Aufnahmeringes (16) formschlüssig in eine Bohrung (12.1, 13.1 oder 14.1) bzw. zwischen zwei Zacken eingreift.

6. Haltevorrichtung nach einem der Ansprüche 2 bis 5, dadurch gekennzeichnet, daß der Quersteg (8) des Bügelelements (2) an der von der Gewindebohrung (5) abgewandten Seite durch einen Ansatz (11) über die seitlichen Schenkel (4, 10) hinaus verlängert ist.

7. Haltevorrichtung nach einem der Ansprüche 1 bis 6, dadurch gekennzeichnet, daß der Schenkel (9) in Verlängerung der Gewindebohrung (5) an seinem Stirnende einen V-Einschnitt (27) mit zur Ebene seines Profilsteges (12) parallelen Kanten aufweist.

8. Haltevorrichtung nach Anspruch 6 oder 7, dadurch gekennzeichnet, daß der Ansatz (11) und der an dieser Seite befindliche freie Schenkel (10) an ihrem Stirnende je einen V-Einschnitt (29 bzw. 28) mit zur Ebene des zugehörigen Profilsteges (14 bzw. 13) verlaufenden Kanten aufweisen.

9. Haltevorrichtung nach einem der Ansprüche 1 bis 8, dadurch gekennzeichnet, daß am Aufnahmering (16) in einer radialen Gewindebohrung (20), die den Flanschen (17) diametral gegenüberliegt, eine Spannschraube (21) gelagert ist und daß an der Spannschraube (21) an ihrem rückwärtigen Ende, an der diese ein Handrädchen trägt, ein Druckbügel (23) in U-Form frei drehbar gelagert ist, dessen Schenkel (25) zu beiden Seiten des Aufnahmeringes (16) verlaufen und an ihrem freien Ende je einen V-Einschnitt (26) mit parallel zur Ringachse verlaufenden Kanten aufweisen.

10. Haltevorrichtung nach einem der Ansprüche 5 bis 9, dadurch gekennzeichnet, daß an einem Flansch (17) des Aufnahmeringes (16) ein seitlicher Ansatz (30) angeformt ist, an dem in einer Querbohrung (31) der Arretierstift (32) gelagert ist.

## Claims

1. A holding device for bars, tubes or the like, in particular for a sun umbrella, which has a yoke element (2) for fitting on to a table edge and a fixing screw (6), wherein two parallel limbs (3, 4) in the position of use receive a plate or the like between them and can be braced by means of the fixing screw (6) which is mounted in a screwthreaded bore (5) in a limb (3), the holding device further includes a receiving ring (16) for receiving a bar which can be braced in the receiving ring (16), and the yoke element (2) and the receiving ring (16) are independent individual parts, wherein the receiving ring (16) is formed substantially like a pipe clamp with two substantially radially projecting flanges (17) which define a gap (18), characterised in that the yoke element (2) is shaped substantially like the letter 'H' and that the flanges (17) can be fitted selectively on to one of the free limbs (9 or 10) or on to the cross bar portion (8) of the yoke element (2) and can be locked to the yoke element (2) by means of an arresting arrangement.

2. A holding device according to claim 1 characterised in that the free limb (9) of the yoke element (2), which extends in line with the screwthreaded bore (5), is in the form of a double-T-profile member with a web portion (12) which is disposed transversely with respect to the axis of the bore and that the oppositely disposed free limb (10) and in part the cross bar portion (8) are also in the form of double-T-profile members, but with the web portion (13 and 14 respectively) extending parallel to the axis of the bore.

3. A holding device according to claim 2 characterised in that the flanges (17) of the receiving ring (16) are of such a thickness that they can be pushed on to the double-T-profile members from the ends thereof and individually lie in positively locking engagement in a respective passage in the profile member.

4. A holding device according to claim 2 or claim 3 characterised in that provided on the web portions (12, 13 or 14 respectively) of the double-T-profile members are arresting means such as successive bores (12.1, 13.1 or 14.1 respectively) or teeth.

5. A holding device according to claim 4 characterised in that mounted in bores (31) in the flanges (17) of the receiving ring (16) is a displaceable, spring-loaded arresting pin (32) which in the position of use of the receiving ring (16) engages in positively locking engagement into a bore (12.1, 13.1 or 14.1) or between two teeth.

6. A holding device according to one of claims 2 to 5 characterised in that the cross bar portion (8) of the yoke element (2) is prolonged beyond the lateral limbs (4, 10) at the side remote from the screwthreaded bore (5) by a projection (11).

7. A holding device according to one of claims 1 to 6 characterised in that at its end, in line with the screwthreaded bore (5), the limb (9) has a V-shaped groove (27) with edges parallel to the plane of its web portion (12).

8. A holding device according to claim 6 or claim 7 characterised in that the projection (11) and the free limb (10) disposed at that side have at their end a respective V-shaped groove (29 and 28 respectively) with edges extending parallel to the plane of the associated web portion (14 and 13 respectively).

9. A holding device according to one of claims 1 to 8 characterised in that a clamping screw (21) is mounted on the receiving ring (16) in a radial screwthreaded bore (20) which is in diametrally opposite relationship to the flanges (17) and that a pressure stirrup (23) of U-shape is freely rotatably mounted on the clamping screw (21) at its rearward end at which it carries a small hand wheel, the limbs (25) of the stirrup extending on both sides of the receiving ring (16) and at their free ends each having a respective V-shaped groove (26) with edges extending parallel to the axis of the ring.

10. A holding device according to one of claims 5 to 9 characterised in that formed on a flange (17) of the receiving ring (18) is a lateral projection (30) on which the arresting pin (32) is mounted in a transverse bore (31).

## Revendications

1. Dispositif de retenue pour des tiges, tubes ou analogues, notamment pour des parasols, qui présentent un élément formant étrier (2) pour être placé sur une arête de table et un boulon de fixation (6), où deux branches parallèles (3, 4), en position d'utilisation, reçoivent une plaque ou analogue entre celles-ci et peuvent être serrées à l'aide du boulon de fixation (6) qui est logé dans un perçage fileté (5) d'une branche (3), où le dispositif de retenue comporte en outre une bague de réception (16) pour recevoir une tige qui peut être serrée dans la bague de réception (16) et où l'élément formant étrier (2) et la bague de réception (16) sont des pièces individuelles autonomes, la bague de réception (16) étant configurée essentiellement à la manière d'un collier pour tuyau avec deux brides (17) faisant saillie à peu près radialement, délimitant une fente (18), caractérisé en ce que l'élément formant étrier (2) est configuré essentiellement comme la lettre "H" et que les brides (17) peuvent être poussées sélectivement sur l'une des branches libres (9 respectivement 10) ou sur la barre transversale (8) de l'élément formant étrier (2) et peuvent être verrouillées au moyen d'un dispositif d'arrêt à l'élément formant étrier (2).

2. Dispositif de retenue selon la revendication 1, caractérisé en ce que la branche libre (9) de l'élément formant étrier (2) s'étendant dans le prolongement du perçage fileté (5) est réalisée sous forme de profilé en T double avec une barre (12) s'étendant transversalement à l'axe de perçage et que la branche opposée libre (10) et partiellement la barre transversale (8) sont également réalisées sous forme de profilés en T double, cependant avec une barre (13 respectivement 14) s'étendant parallèlement à l'axe de perçage.

3. Dispositif de retenue selon la revendication 2, caractérisé en ce que les brides (17) de la bague de réception (16) ont une épaisseur suffisante pour qu'elles puissent être poussées sur les profilés en T double depuis leurs côtés frontaux et s'engagent par concordance des formes individuellement respectivement dans un canal du profilé.

4. Dispositif de retenue selon la revendication 2 ou 3, caractérisé en ce que sont prévus aux barres (12, 13 respectivement 14) des profilés en T double des moyens d'arrêt comme des perçages successifs (12.1, 13.1 respectivement 14.1) ou des dents.

5. Dispositif de retenue selon la revendication 4, caractérisé en ce qu'il est logé dans des perçages (31) des brides (17) de la bague de réception (16) une tige d'arrêt déplaçable (32) soumise à l'action d'un ressort qui, en position d'utilisation de la bague de réception (16), s'engage par concordance des formes dans un perçage (12.1, 13.1 ou 14.1) respectivement entre deux dents.

6. Dispositif de retenue selon l'une des revendications 2 à 5, caractérisé en ce que la barre transversale (8) de l'élément formant étrier (2) est prolongée au côté éloigné du perçage fileté (5) par un bout rapporté (11) au-delà des branches latérales (4, 10).

7. Dispositif de retenue selon l'une des revendications 1 à 6, caractérisé en ce que la branche (9) présente dans le prolongement du perçage fileté (5) à son extrémité frontale une encoche en V (27) avec des arêtes parallèles au plan de son âme de profile (12).

8. Dispositif de retenue selon la revendication 6 ou 7, caractérisé en ce que le bout rapporté (11) et la branche libre (10) se trouvant à ce côté présentent à leur extrémité frontale respectivement une encoche en V (29 respectivement 28) avec des arêtes s'étendant relativement au plan de l'âme associée du profilé (14 respectivement 13).

9. Dispositif de retenue selon l'une des revendications 1 à 8, caractérisé en ce qu'il est logé à la bague de réception (16) dans un perçage fileté radial (20) opposé diamétralement aux brides (17) une vis de serrage (21) et qu'il est logé d'une manière librement tournante à la vis de serrage (21) à son extrémité arrière où celle-ci porte une petite roue à main, un étrier de pression (23) en forme de U dont les branches (25) s'étendent des deux côtés de la bague de réception (16) et qui présentent à leur extrémité libre respectivement une encoche en V (26) avec des arêtes d'étendant parallèlement à l'axe de la bague.

10. Dispositif de retenue selon l'une des revendications 5 à 9, caractérisé en ce qu'il est formé sur une bride (17) de la bague de réception (16) un bout latéral (30), dans un perçage transversal (31) duquel est logé la tige d'arrêt (32).
